# EUROPÄISCHE PATENTSCHRIFT

(11) **EP 0 769 191 B1**
(45) Veröffentlichungstag und Bekanntmachung des Hinweises auf die Patenterteilung: **23.09.1998**
(21) Anmeldenummer: 95921717.5
(22) Anmeldetag: 21.06.1995
(51) Int. Cl.: G21F 9/28, G21F 9/12, B01J 49/00

(54) **VERFAHREN UND EINRICHTUNG ZUM ENTSORGEN EINES KATIONENAUSTAUSCHERS**
METHOD AND DEVICE FOR THE DISPOSAL OF A CATION EXCHANGER
PROCEDE ET DISPOSITIF PERMETTANT D'ELIMINER UN ECHANGEUR DE CATIONS

(30) Priorität: 04.07.1994 DE 4423398
(43) Veröffentlichungstag der Anmeldung: 23.04.1997
(73) Patentinhaber: SIEMENS AKTIENGESELLSCHAFT, 80333 München (DE)
(72) Erfinder: BERTHOLDT, Horst-Otto, D-91336 Heroldsbach (DE); GASSEN, Rainer, D-90765 Fürth (DE)
(86) Internationale Anmeldenummer: DE9500802
(87) Internationale Veröffentlichungsnummer: WO9601478

(56) Entgegenhaltungen:
- DE-B- 1 257 692
- GB-A- 2 229 312
- US-A- 3 887 498
- DATABASE WPI Week 9327 Derwent Publications Ltd., London, GB; AN 87-089430 & JP,A,62 038 247 (HITACHI) , 19.Februar 1987
- DATABASE WPI Week 8443 Derwent Publications Ltd., London, GB; AN 84-266387 & JP,A,59 162 493 (HITACHI) , 13.September 1984

## Beschreibung

Die Erfindung betrifft ein Verfahren zum Entsorgen eines Kationenaustauschers, der mit radioaktiven und mit inaktiven Kationen beladen ist. Die Erfindung betrifft auch eine Einrichtung zum Entsorgen eines solchen Kationenaustauschers.

Kationenaustauscher werden bei der Durchführung von Dekontaminationsverfahren in kerntechnischen Anlagen eingesetzt. Dabei werden die bei der Dekontamination anfallenden Kationen in den Kationenaustauschern zurückgehalten. Nach einer üblichen Dekontamination enthält der Kationenaustauscher sowohl radioaktive als auch inaktive Kationen. Die radioaktiven Kationen sind Kobalt-60, Kobalt-58, Mangan-54 und/oder Chrom-51. Es können aber auch andere radioaktive Kationen vorhanden sein. Die inaktiven Kationen sind in der Regel Eisen und Nickel.

Nach der Dekontamination einer Anlage bleibt der beladene Kationenaustauscher übrig. Die im Kationenaustauscher enthaltenen beladenen Harze müssen entsorgt werden. Sie werden dazu aus dem Kationenaustauscher-Behälter entfernt und für eine Endlagerung weiter behandelt. Die Verfahrensschritte bis zum Einbringen in ein Endlager sind aufwendig und kostenintensiv, da die Harze radioaktive Stoffe enthalten.

Da bei einem üblichen Dekontaminationsverfahren eine große Kationenmenge anfällt, muß eine große Harzmenge entsorgt und endgelagert werden.

Der Erfindung lag die Aufgabe zugrunde, ein Verfahren zum Entsorgen eines Kationenaustauschers anzugeben, das gewährleistet, daß möglichst wenig Harz anfällt, das radioaktive Kationen enthält und daher sicher in einem Endlager aufbewahrt werden muß. Es soll auch eine geeignete Einrichtung zum Entsorgen eines Kationenaustauschers angegeben werden.

Die als erste genannte Aufgabe wird gemäß der Erfindung, wie in Anspruch 1 dargelegt, dadurch gelöst, daß die inaktiven Kationen, die nicht zweiwertig sind, in anionische Komplexe umgewandelt werden und daß diese Komplexe aus dem Kationenaustauscher herausgespült werden.

Der Kationenaustauscher wird dadurch selektiv regeneriert. Die im Kationenaustauscher vorhandenen radioaktiven Kationen sind nämlich alle zweiwertig und bleiben daher im Kationenaustauscher zurück. Dadurch, daß die inaktiven Kationen aus dem Kationenaustauscher entfernt werden, bietet das Harz im Kationenaustauscher wieder mehr Platz für einen neuen Dekontaminationseinsatz des Kationenaustauschers. Dabei gelangen erneut radioaktive und inaktive Kationen in den Kationenaustauscher und bei einer zweiten selektiven Regeneration werden wieder nur die inaktiven Kationen entfernt.

Durch den Wechsel von Dekontaminationseinsatz und selektiver Regeneration wird der Vorteil erzielt, daß der Kationenaustauscher solange betrieben werden kann, bis er fast ausschließlich mit radioaktiven Kationen beladen ist. Da seine Kapazität nicht durch große Mengen inaktiver Kationen begrenzt wird, bietet er mehr Platz als sonst für radioaktive Kationen und ist daher für sehr lange Zeitspannen einsatzfähig. In einem Zeitintervall fällt vorteilhafterweise wenig Harz an, das einem Endlager zugeführt werden muß. Man kommt folglich mit einem sehr kleinen Endlager aus.

Die anionischen Komplexe, die aus dem Kationenaustauscher herausgespült worden sind, enthalten keine radioaktiven Bestandteile. Sie können daher in einfacher Weise entsorgt werden. Die Lösung, die die Komplexe enthält, kann z.B. eingedampft werden.

Bei einem Dekontaminationsverfahren können zunächst inaktive zweiwertige Eisenkationen gebildet werden. Diese werden aber bereits durch vorhandene geringe Mengen Luftsauerstoff zu dreiwertigen Eisenkationen aufoxidiert. Dadurch liegen die inaktiven Eisenkationen, die einen großen Anteil der inaktiven Kationen stellen, nicht als zweiwertige Kationen vor und werden in einen anionischen Komplex umgewandelt.

Um das Aufoxidieren der zweiwertigen Eisenkationen zu unterstützen, kann ein Oxidationsmittel, beispielsweise eine geringe Menge Wasserstoffperoxid, eingesetzt werden.

Die Umwandlung der inaktiven Kationen in anionische Komplexe erfolgt beispielsweise bei einer Temperatur über 20 °C. Insbesondere erfolgt die Umwandlung bei einer Temperatur zwischen 60 °C und 80 °C. Die Umwandlung läuft bei diesen Temperaturen besonders günstig ab.

Beispielsweise wird in den beladenen Kationenaustauscher ein Komplexbildner eingebracht, wodurch die inaktiven Kationen in anionische Komplexe umgewandelt werden.

Der Komplexbildner wandelt dabei nur Kationen, die nicht zweiwertig sind, in Komplexe um. Von den nach einem Dekontaminationsverfahren in einem Kationenaustauscher vorhandenen Kationen sind nur die aktiven Kationen zweiwertig. Durch den Einsatz des Komplexbildners wird der Kationenaustauscher selektiv regeneriert, indem nur die inaktiven Kationen in anionische Komplexe umgewandelt werden, während die radioaktiven Kationen am Harz des Kationenaustauschers gebunden bleiben.

Als Komplexbildner wird beispielsweise Oxalsäure verwendet. Diese bildet mit den inaktiven Kationen, z.B. mit dreiwertigem Eisen, Oxalatkomplexe, z.B. einen Eisen-Oxalatkomplex. Besonders geeignet als Komplexbildner ist beispielsweise eine Oxalsäurelösung, die mehr als 0,1 Mol Oxalsäure enthält. Insbesondere ist eine einmolare Oxalsäurelösung geeignet.

Mit dem Einsatz von Oxalsäure wird der Vorteil erzielt, daß der Kationenaustauscher nach der selektiven Regeneration sofort wieder zur Dekontamination eingesetzt werden kann.

Verbleibende Oxalsäurereste im Kationenaustauscher stören nämlich ein Dekontaminationsverfahren nicht. Man kann vorteilhafterweise auf ein aufwendiges Spülen des Kationenaustauschers nach der selektiven Regeneration verzichten.

Durch die Auswahl einer geeigneten Oxalsäurekonzentration wird der Vorteil erzielt, daß einerseits die in den Kationenaustauscher eingespeiste Oxalsäuremenge für die selektive Regeneration ausreicht, andererseits aber das eingespeiste Volumen der Oxalsäurelösung auf das Fassungsvermögen des Kationenaustauschers abgestimmt ist.

Die aus dem Kationenaustauscher herausgespülten anionischen Komplexe können oxidativ zerstört werden. Dazu können in einem nachgeordneten Verfahrensschritt den anionischen Komplexen Wasserstoffperoxid und/oder Ozon zugegeben werden. Bei einer derartigen oxidativen Zerstörung der Komplexe entsteht Kohlenstoffdioxid, das abgegeben werden kann. Außerdem fällt eine Lösung, die die inaktiven Kationen enthält, an. Eine solche Lösung bedarf keiner aufwendigen Entsorgungsschritte.

Mit dem Verfahren nach der Erfindung wird insbesondere der Vorteil erzielt, daß ein Kationenaustauscherharz, das nach einem Dekontaminationsschritt radioaktive und inaktive Kationen enthält, selektiv regeneriert werden kann, d.h., daß das Harz von den inaktiven Kationen befreit wird, während die radioaktiven Kationen am Harz gebunden bleiben. An der gleichen Harzmenge können also vorteilhafterweise durch die selektive Regeneration mehr radioaktive Kationen angebunden werden. Daraus folgt, daß weniger mit radioaktiven Kationen beladene Harze anfallen und folglich für solche Harze nur wenig Endlagerraum bereitgestellt werden muß.

Die zweite gestellte Aufgabe, eine Einrichtung zum Entsorgen eines Kationenaustauschers mit dem Verfahren nach einem der Ansprüche 1 bis 12 anzugeben, wird gemäß der Erfindung dadurch gelöst, daß der Kationenaustauschen (3) mit einer Einspeiseleitung (4) für einen Komplexbildner und mit einer Ableitung (6) verbunden ist.

Über diese Einspeiseleitung wird nach Beendigung eines Dekontaminationseinsatzes ein Komplexbildner zur selektiven Regeneration des Kationenaustauschers eingespeist. Die dann im Kationenaustauscher gebildeten anionischen Komplexe der inaktiven Kationen werden, weil der Kationenaustauscher keine Anionen festhalten kann, durch die Ableitung abgegeben. Im Kationenaustauscher entsteht dadurch erneut Platz zur Aufnahme von Kationen während eines zweiten Dekontaminationseinsatzes.

Die Ableitung des Kationenaustauschers ist beispielsweise mit einer Aufbereitungsvorrichtung verbunden, in die eine Leitung für ein Oxidationsmittel einmündet. In dieser Aufbereitungsvorrichtung können die Komplexe zerstört werden. Dabei entstehen Kohlenstoffdioxid, das abgegeben wird, sowie inaktive Kationen in einer Lösung, die mit einfachen Mitteln entsorgt werden kann.

Der Kationenaustauscher ist beispielsweise in einem endlagerungsfähigen Behälter angeordnet. Damit wird der Vorteil erzielt, daß der gesamte Kationenaustauscher, wenn er vollständig mit radioaktiven Kationen beladen ist, in ein Endlager eingebracht werden kann. Man kommt vorteilhafterweise ohne direkten Kontakt mit dem beladenen Harz des Kationenaustauschers aus. Das Harz braucht nicht aus dem Kationenaustauscher herausgenommen zu werden.

Mit der Einrichtung nach der Erfindung, wird wie mit dem Verfahren nach der Erfindung der Vorteil erzielt, daß nur eine kleine Endlagerkapazität für das Kationenaustauscherharz erforderlich ist.

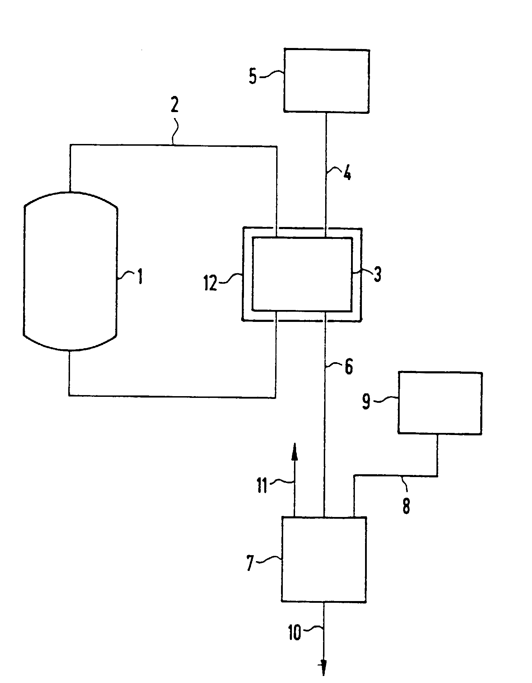

Eine Einrichtung zum Entsorgen eines Kationenaustauschers, mit der ein entsprechendes Verfahren durchführbar ist, wird anhand der Zeichnung näher erläutert:

Die Zeichnung zeigt ein zu dekontaminierendes System 1, das beispielsweise der Primärkreislauf eines Kernkraftwerkes sein kann. Zur Dekontamination wird eine zuvor eingespeiste Dekontaminationslösung durch einen Dekontaminationskreislauf 2 geleitet, in den ein Kationenaustauscher 3 eingebunden ist. Im Kationenaustauscher 3 werden sowohl radioaktive als auch inaktive Kationen zurückkgehalten.

Zum Entsorgen des Kationenaustauschers 3 wird dieser vom Dekontaminationskreislauf 2 abgetrennt. Dann wird in den Kationenaustauscher 3 über eine Einspeiseleitung 4 aus einem Komplexbildner-Behälter 5 ein Komplexbildner eingespeist. Durch diesen Komplexbildner werden die inaktiven Kationen in anionische Komplexe umgewandelt, die dann den Kationenaustauscher 3 verlassen.

Die Lösung, die die Komplexe enthält, gelangt über eine Ableitung 6 des Kationenaustauschers 3 in eine Aufbereitungsvorrichtung 7 für die Komplexe. Zur Aufbereitung der Komplexe wird in die Aufbereitungsvorrichtung 7 über eine Leitung 8 ein Oxidationsmittel aus einem Oxidationsmittel-Behälter 9 eingespeist. Von der Aufbereitungsvorrichtung 7 gehen eine Ableitung 10 für eine Lösung, die keine radioaktiven Stoffe enthält, und eine Ableitung 11 für ein Gas, z.B. Kohlenstoffdioxid, aus.

Nachdem sich ein Dekontaminationsvorgang und eine selektive Regeneration des Kationenaustauschers 3 einmal oder mehrmals abgewechselt haben, enthält das Harz des Kationenaustauschers 3 fast nur noch radioaktive Kationen. Das Harz ist also optimal für die Beseitigung radioaktiver Kationen eingesetzt worden. Das Harz kann dann in ein Endlager gebracht werden. Durch die optimale Ausnutzung des Harzes kommt man für das Harz mit einem sehr kleinen Endlager aus.

Der Kationenaustauscher 3 kann bereits im bestimmungsgemäßen Betrieb in einem endlagerungsfähigen Behälter 12 angeordnet sein. Es erübrigt sich dann das Umfüllen des beladenen Harzes in einen speziellen Endlagerbehälter. Vielmehr wird der gesamte Kationenaustauscher 3 in ein Endlager gebracht und durch einen neuen Kationenaustauscher 3 ersetzt. Das Personal kommt dadurch nicht mit dem beladenen Harz in Kontakt.

## Patentansprüche

1. Verfahren zum Entsorgen eines Kationenaustauschers (3), der mit radioaktiven und inaktiven Kationen beladen ist, **dadurch gekennzeichnet,** daß zur selektiven Regeneration des Kationenaustauschers (3) nur die inaktiven Kationen, die nicht zweiwertig sind, in anionische Komplexe umgewandelt und diese Komplexe aus dem Kationenaustauscher (3) herausgespült werden, so daß er zusätzliche zweiwertige radioaktive Kationen aufnehmen kann, und daß nach abwechselndem Beladen und selektivem Regenerieren das Harz des Kationenaustauschers (3) einem Endlager zugeführt wird.

2. Verfahren nach Anspruch 1,
**dadurch gekennzeichnet,** daß zweiwertige Eisenkationen zu dreiwertigen Eisenkationen aufoxidiert werden und daß die dreiwertigen Eisenkationen in anionische Komplexe umgewandelt werden.

3. Verfahren nach Anspruch 2,
**dadurch gekennzeichnet**, daß ein Oxidationsmittel zum Aufoxidieren der zweiwertigen Eisenkationen eingesetzt wird.

4. Verfahren nach Anspruch 3,
**dadurch gekennzeichnet,** daß als Oxidationsmittel eine geringe Menge Wasserstoffperoxid eingesetzt wird.

5. Verfahren nach einem der Ansprüche 1 bis 4,
**dadurch gekennzeichnet**, daß die inaktiven Kationen bei einer Temperatur über 20 °C in anionische Komplexe umgewandelt werden.

6. Verfahren nach Anspruch 5,
**dadurch gekennzeichnet,** daß die inaktiven Kationen bei einer Temperatur zwischen 60 °C und 80 °C in anionische Komplexe umgewandelt werden.

7. Verfahren nach einem der Ansprüche 1 bis 6,
**dadurch gekennzeichnet**, daß ein Komplexbildner in den beladenen Kationenaustauscher (3) eingebracht wird, wodurch die inaktiven Kationen in anionische Komplexe umgewandelt werden.

8. Verfahren nach Anspruch 7,
**dadurch gekennzeichnet,** daß als Komplexbildner Oxalsäure in den beladenen Kationenaustauscher (3) eingebracht wird.

9. Verfahren nach Anspruch 8,
**dadurch gekennzeichnet,** daß als Komplexbildner eine Lösung, die mehr als 0,1 Mol Oxalsäure enthält, eingebracht wird.

10. Verfaren nach Anspruch 9,
**dadurch gekennzeichnet**, daß als Komplexbildner eine einmolare Oxalsäurelösung eingebracht wird.

11. Verfahren nach einem der Ansprüche 1 bis 10,
**dadurch gekennzeichnet,** daß die aus dem Kationenaustauscher (3) herausgespülten anionischen Komplexe oxidativ zerstört werden.

12. Verfahren nach Anspruch 11,
**dadurch gekennzeichnet**, daß den anionischen Komplexen Wasserstoffperoxid und/oder Ozon zugegeben werden, wodurch die anionischen Komplexe oxidativ zerstört werden.

13. Einrichtung zum Entsorgen eines Kationenaustauschers (3) mit dem Verfahren nach einem der Ansprüche 1 bis 12,
**dadurch gekennzeichnet,** daß der Kationenaustauscher (3) mit einer Einspeiseleitung (4) für einen Komplexbildner und mit einer Ableitung (6) verbunden ist.

14. Einrichtung nach Anspruch 13,
**dadurch gekenneichnet,**daß die Ableitung (6) mit einer Aufbereitungsvorrichtung (7) verbunden ist, in die eine Leitung (8) für ein Oxidationsmittel einmündet.

15. Einrichtung nach einem der Ansprüche 13 oder 14,
**dadurch gekennzeichnet,** daß der Kationenaustauscher (3) in einem endlagerungsfähigen Behälter (12) angeordnet ist.

## Claims

1. Method for the disposal of the waste of a cation exchanger (3) which is loaded with radioactive and inactive cations, characterized in that for the selective regeneration of the cation exchanger (3) only the inactive cations which are not bivalent are converted into anionic complexes and these complexes are rinsed out of the cation exchanger (3) so that it can receive additional bivalent radioactive cations, and in that after alternating loading and selective regeneration the resin of the cation exchanger (3) is supplied to a final store.

2. Method according to claim 1, characterized in that bivalent iron cations are oxidized to trivalent iron cations, and in that the trivalent iron cations are converted into anionic complexes.

3. Method according to claim 2, characterized in that an oxidation medium is used for oxidizing the bivalent iron cations.

4. Method according to claim 3, characterized in that a small quantity of hydrogen peroxide is used as oxidation medium.

5. Method according to one of claims 1 to 4, characterized in that the inactive cations are converted into anionic complexes at a temperature above 20°C.

6. Method according to claim 5, characterized in that the inactive cations are converted into anionic complexes at a temperature between 60°C and 80°C.

7. Method according to one of claims 1 to 6, characterized in that a complex former is introduced into the loaded cation exchanger (3), whereby the inactive cations are converted into anionic complexes.

8. Method according to claim 7, characterized in that oxalic acid is introduced as complex former into the loaded cation exchanger (3).

9. Method according to claim 8, characterized in that a solution which contains more than 0.1 mol oxalic acid is introduced as complex former.

10. Method according to claim 9, characterized in that a single-molar oxalic acid solution is introduced as complex former.

11. Method according to one of claims 1 to 10, characterized in that the anionic complexes rinsed out of the cation exchanger (3) are destroyed by means of oxidation.

12. Method according to claim 11, characterized in that hydrogen peroxide and/or ozone are added to the anionic complexes, whereby the anionic complexes are destroyed by means of oxidation.

13. Device for the disposal of the waste of a cation exchanger (3) with the method according to one of claims 1 to 12, characterized in that the cation exchanger (3) is connected to a supply line (4) for a complex former and to an outlet line (6).

14. Device according to claim 13, characterized in that the outlet line (6) is connected to a preparation device (7), into which a line (8) for an oxidation medium opens.

15. Device according to one of claims 13 or 14, characterized in that the cation exchanger (3) is arranged in a container (12) capable of final storage.

## Revendications

1. Procédé pour éliminer un échangeur de cations (3) qui est chargé de cations radioactifs et inactifs, caractérisé en ce que, en vue de la régénération sélective de l'échangeur de cations (3), seuls les cations inactifs, qui ne sont pas divalents, sont convertis en complexes anioniques et en ce que ces complexes sont lessivés de l'échangeur de cations (3) de sorte qu'il peut accumuler des cations radioactifs divalents supplémentaires et en ce que la résine de l'échangeur de cations (3) est acheminée vers le lieu de stockage définitif après des étapes alternatives de charge et de régénération sélective.

2. Procédé selon la revendication 1, caractérisé en ce que les cations de fer divalents sont oxydés en cations de fer trivalents et en ce que les cations de fer trivalents sont convertis en complexes anioniques.

3. Procédé selon la revendication 2, caractérisé en ce qu'on utilise un agent d'oxydation pour l'oxydation des cations de fer divalents.

4. Procédé selon la revendication 3, caractérisé en ce qu'on utilise à titre d'agent d'oxydation une faible quantité de peroxyde d'hydrogène.

5. Procédé selon l'une des revendications 1 à 4, caractérisé en ce que les cations inactifs sont convertis à une température supérieure à 20 °C en complexes anioniques.

6. Procédé selon la revendication 5, caractérisé en ce que les cations inactifs sont convertis à une température entre 60 °C et 80 °C en complexes anioniques.

7. Procédé selon l'une des revendications 1 à 6, caractérisé en ce qu'on introduit un agent complexant dans l'échangeur de cations (3) chargé, ce qui convertit les cations inactifs en complexes anioniques.

8. Procédé selon la revendication 7, caractérisé en ce qu'on introduit à titre d'agent complexant de l'acide oxalique dans l'échangeur de cations (3) chargé.

9. Procédé selon la revendication 8, caractérisé en ce qu'on introduit à titre d'agent complexant une solution qui contient plus de 0,1 mole d'acide oxalique.

10. Procédé selon la revendication 9, caractérisé en ce qu'on introduit à titre d'agent complexant une solution d'acide oxalique 1 M.

11. Procédé selon l'une des revendications 1 à 10, caractérisé en ce que les complexes anioniques lessivés de l'échangeur de cations (3) sont détruits par oxydation.

12. Procédé selon la revendication 11, caractérisé en ce qu'on ajoute aux complexes anioniques du peroxyde d'hydrogène et/ou de l'ozone, ce qui détruit les complexes anioniques par oxydation.

13. Dispositif pour éliminer un échangeur de cations (3) au moyen d'un procédé selon l'une des revendications 1 à 12, caractérisé en ce que l'échangeur de cations (3) est raccordé à une conduite d'alimentation (4) pour un agent complexant et à une conduite d'évacuation (6).

14. Dispositif selon la revendication 13, caractérisé en ce que la conduite d'évacuation (6) est raccordée à une installation de traitement (7) dans laquelle débouche une conduite (8) pour un agent d'oxydation.

15. Dispositif selon l'une des revendications 13 ou 14, caractérisé en ce que l'échangeur de cations (3) est disposé dans un récipient (12) approprié au stockage définitif.
